# EUROPEAN PATENT SPECIFICATION

(11) **EP 4 036 865 B1**
(45) Date of publication and mention of the grant of the patent: **16.04.2025**
(21) Application number: 21154123.0
(22) Date of filing: 28.01.2021
(51) Int. Cl.: G06T 19/20, G06T 7/62

(54) **METHOD, DEVICE AND SYSTEM FOR VISUALIZING COLON**
VERFAHREN, VORRICHTUNG UND SYSTEM ZUR VISUALISIERUNG DES DICKDARMS
PROCÉDÉ, DISPOSITIF ET SYSTÈME DE VISUALISATION DU COLON

(43) Date of publication of application: 03.08.2022
(73) Proprietor: Siemens Healthineers AG, 91301 Forchheim (DE)
(72) Inventor: BELLU, Gowri Shanker, 560099 Bangalore, Karnataka (IN); MOHANA KRISHNA, M., 560068 Bangalore, Karnataka (IN)
(74) Representative: Horn Kleimann Waitzhofer Schmid-Dreyer Patent- und Rechtsanwälte PartG mbB

(56) References cited:
- JP-A- 2015 123 250
- US-A1- 2002 039 400
- VITOANTONIO BEVILACQUA ET AL: "Relevant Measurements for Polyps in 3D Virtual Colonoscopy", 16 September 2009, EMERGING INTELLIGENT COMPUTING TECHNOLOGY AND APPLICATIONS, SPRINGER BERLIN HEIDELBERG, BERLIN, HEIDELBERG, PAGE(S) 984 - 993, ISBN: 978-3-642-04069-6, XP019140598

## Description

The present invention relates to a method, device and system for processing medical images. In particular, the invention relates to a method, device and system for visualizing colon associated with a patient.

US 2002/039400 A1 discloses a system and method for generating a three-dimensional visualization image of an object such as an organ using volume visualization techniques and exploring the image using a guided navigation system which allows the operator to travel along a flight path and to adjust the view to a particular portion of the image of interest in order, for example, to identify polyps, cysts or other abnormal features in the visualized organ. An electronic biopsy can also be performed on an identified growth or mass in the visualized object. Virtual colonoscopy can be enhanced by electronically removing residual stool, fluid and non-colonic tissue from the image of the colon, by employing bowel preparation followed by image segmentation operations. Methods are also employed for virtually expanding regions of colon collapse using image segmentation results.

Colorectal cancer is a type of cancer that affects colon and rectum. This can occur in young adults and teenagers, but incidences of colorectal cancers are mostly seen in people after the age of 50 years. Computed tomography colonography (CTC) is a potential screening technique for colorectal cancer. CTC is a virtual colonoscopy method to examine the large intestine for cancer and growths such as polyps. CTC has a greater acceptability over other contemporary methods of screening for colorectal cancer such as optical colonography, blood testing methods, etc. However, in multiple instances of CTC, analysis may remain incomplete or inaccurate. This may be due to insufficient patient preparation resulting in incomplete colonography scans. In such cases, the patient may have to undergo scanning procedure for a second time. This increases the increased exposure to radiation, affecting the health of the patient. Alternatively, the patient may have to undergo colonoscopy to detect the abnormalities in the colon which has an underlying risk of damage to the colon of the patient.

Currently, there is no way reducing the risk of radiation exposure to patients in case of an incomplete colonography procedure. Therefore, there is a need for a method and system which enables effective visualization of the colon using computed tomography colonography such that medical image obtained at the first instance can be effectively utilized.

The object of the invention is therefore to provide a method, device and system that enables accurate visualization of the colon of a patient.

The invention achieves the object by a method of visualization of a colon of a patient. The method comprises receiving a medical image suitable for virtual colonoscopy of the patient. The medical image may be received from a medical imaging device. The medical imaging device may include, for example, but not limited to, a computed tomography device, X-ray imaging device, etc. For example, the medical imaging device may be a computed tomography device configured to for colonography or virtual colonoscopy. The medical image may be three-dimensional and/or related to a volume. The imaging plane and/or the volume may be a part of a patient body. The imaging plane and/or the volume may include one or more objects associated with a patient. The objects may be in particular one or more body parts associated with the patient that may have been imaged. The objects may include, but not be limited to, one or more imaged organs, tissues, skeletal information, associated with the patient. For example, the object may be a colon of the patient. The medical image may, for example, be in the form of an array of voxels or voxels. Such arrays of voxels or voxels may be representative of intensity, absorption or other parameter as a function of three-dimensional position, and may, for example, be obtained by suitable processing of measurement signals obtained by one or more of the above-mentioned medical imaging devices. In particular, the medical image includes information associated with the colon of the patient.

The method further comprises identifying from the medical image a diameter of the colon. The diameter of the colon may be defined as a distance between two points on parallel walls of the colon such that a line drawn between the two points passes through a center of the colon. The method further comprises determining if the diameter of the colon is less than a pre-defined threshold. The pre-defined threshold may be a minimum value associated with the diameter of the colon required for accurate visualization of the colon. For example, if the diameter of the colon is below the pre-defined threshold, visualization of the colon, particularly the interior of the colon, may be difficult. In an embodiment, the pre-defined threshold associated with the diameter of the colon in the medical image may be in a range between 3 cm and 9 cm. The method further comprises adjusting one or more voxels associated with the colon in the medical image. The one or more voxels are adjusted if the diameter of the colon is less than the pre-defined threshold. The one or more voxels associated with the colon are adjusted such that the diameter of the colon is equal to or greater than the pre-defined threshold. In an embodiment, the one or more voxels to be adjusted lie in an inner surface of the colon in the medical image. Advantageously, the method enables effective visualization of the colon in the medical image. The method enables expansion of the colon such that an abnormality in the colon can be observed easily. Yet another advantage of the invention is that a need for second round of imaging of the patient is avoided. Therefore, patient's exposure to radiation is reduced.

According to an embodiment, identifying from the medical image the diameter of the colon comprises identifying a centerline associated with the colon in the medical image. The centerline is a line that falls within an exact center of the colon.

Therefore, the centerline lies parallel to the walls of the colon. The method further includes determining a first center of curvature on a first wall of the colon in the medical image. The center of curvature is a point that is at a distance from the curve equal to a radius of curvature lying on a normal vector. The method comprises determining a second center of curvature on a second wall of the colon in the medical image. Therefore, the first wall and the second wall of the colon are parallel to each other. Thus, the first point of curvature and the second point of curvature lie opposite to each other in a tubular structure of the colon. The method further comprises defining a diameter of the colon based on the first center of curvature and the second center of curvature. The diameter includes the first and the second points of curvature at either end points of the diameter. Therefore, when a line is drawn between the first center of curvature and the second center of curvature, the line passes through the centerline of the colon in the medical image. Advantageously, determining the diameter of the colon enables accurate mapping of the diameter with the pre-defined threshold associated with the diameter of the colon.

According to a further embodiment, the first wall of the colon and the second wall of the colon form a part of the inner surface of the colon. The colon has an outer surface and an inner surface. The inner surface of the colon forms the interior of the colon and the outer surface of the colon forms the exterior of the colon. Therefore, adjustment of the one or more voxels associated with the colon is performed on the inner surface of the colon in the medical image.

According to an embodiment, determining if the diameter of the colon is less than the pre-defined threshold comprises positioning a virtual sphere on the centerline of the colon in the medical image. The virtual sphere may be a sphere of reference having a diameter identical to that of a pre-defined threshold diameter of the colon. In an embodiment, the virtual sphere is movable along the centerline of the colon. The virtual sphere enables determining the actual diameter of the colon in the medical image. In a further embodiment, the virtual sphere may not touch the inner surface of the colon. The method further comprises moving the virtual sphere along the centerline of the colon in the medical image. During the movement of the virtual sphere a determination is made if the virtual sphere touches the inner surface of the colon. If the virtual sphere does not touch the inner surface of the colon in the medical image, the diameter of the colon is above or equal to the pre-defined threshold. However, if the virtual sphere touches the inner surface of the colon in the medical image, the diameter of the colon may be less than the pre-defined threshold associated with the diameter of the colon. The method further comprises determining at least one location in the colon where the diameter of the colon is less than the pre-defined threshold, based on whether the virtual sphere touches the inner surface of the colon in the medical image. Advantageously, the invention enables accurate identification of regions in the colon where the diameter of the colon does not meet the pre-defined threshold value.

According to an embodiment, adjusting the one or more voxels associated with the colon in the medical image comprises displacing the one or more voxels associated with the colon in the medical image based on the diameter of the virtual sphere. The one or more voxels in the inner surface of the colon may be displaced according to the diameter of the virtual sphere. Therefore, the colon in the medical image achieves a diameter similar or identical to that of the virtual sphere. In an embodiment, displacement of the voxels in the inner surface of the colon may also cause a proportionate displacement of voxels on the outer surface of the colon. Therefore, the diameter of the colon may be increased proportionately without causing a distortion in the medical image of the colon. The method further comprises generating a modified medical image comprising the displaced one or more voxels associated with the colon. The modified medical image includes a colon having a diameter equal to or greater than the pre-defined threshold associated with the diameter of the colon. Advantageously, the invention enables effective visualization of the colon by generating a modified medical image comprising a colon having a diameter meeting the pre-defined threshold. Therefore, multiple rounds of imaging to accurately visualize the colon is avoided.

The object of the invention is also achieved by a medical imaging device for visualizing a colon associated with a patient. The device comprises one or more processing units, a scanner unit configured to capture one or more medical images and a memory coupled to the one or more processing units. The memory comprises a image processing module configured to perform the method steps as described above.

The invention relates in another aspect to a system for visualizing a colon associated with a patient. According to an embodiment, the system includes one or more one or more servers and a medical imaging device coupled to the one or more servers. The one or more servers comprise instructions, which when executed causes the one or more servers to perform the method steps as described above.

The invention relates in one aspect to a computer program product comprising a computer program, the computer program being loadable into a storage unit of a system, including program code sections to make the system execute the method according to an aspect of the invention when the computer program is executed in the system.

The invention relates in one aspect to a computer-readable medium, on which program code sections of a computer program are saved, the program code sections being loadable into and/or executable in a system to make the system execute the method according to an aspect of the invention when the program code sections are executed in the system.

The realization of the invention by a computer program product and/or a computer-readable medium has the advantage that already existing management systems can be easily adopted by software updates in order to work as proposed by the invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The present invention is further described hereinafter with reference to illustrated embodiments shown in the accompanying drawings, in which:
FIG 1 illustrates a block diagram of a client-server architecture which provides a geometric modeling of components representing different parts of a real-world object, according to an embodiment of the present invention.
FIG 2 illustrates a block diagram of a data processing system in which an embodiment for visualizing a colon can be implemented.
FIG 3 illustrates a flowchart of a method of visualizing a colon of a patient, according to an embodiment of the invention.
FIG 4 illustrates a flowchart of a method of identifying the diameter of the colon in the medical image, according to an embodiment of the invention.
FIG 5 illustrates a flowchart of a method of determining if the diameter of the colon is less than the pre-defined threshold, according to an embodiment of the invention.
FIG 6 illustrates an exemplary embodiment of implementation of a method of visualizing a colon, according to an embodiment of the invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

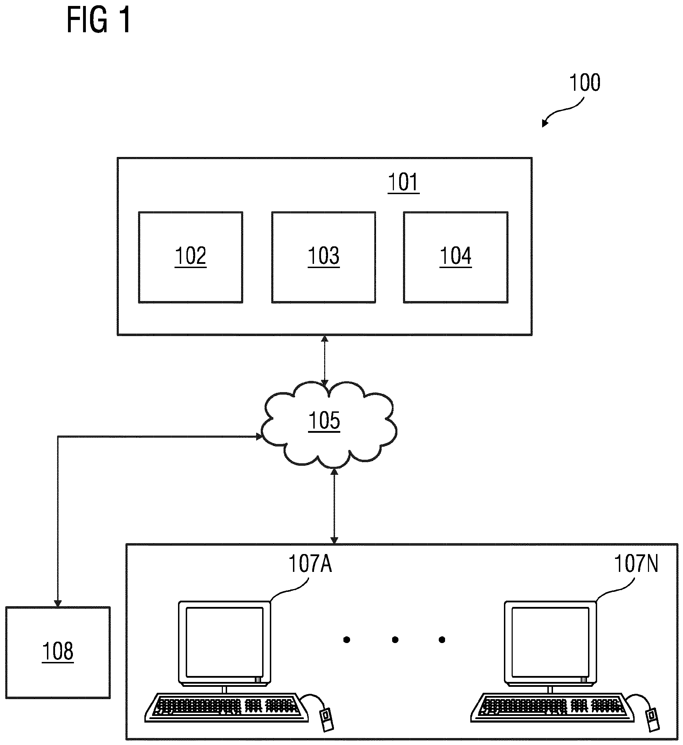

FIG 1 provides an illustration of a block diagram of a client-server architecture that is a geometric modelling of components representing different parts of real-world objects, according to an embodiment. The client-server architecture 100 includes a server 101 and a plurality of client devices 107A-N. Each of the client device 107A-N is connected to the server 101 via a network 105, for example, local area network (LAN), wide area network (WAN), WiFi, etc. In one embodiment, the server 101 is deployed in a cloud computing environment. As used herein, "cloud computing environment" refers to a processing environment comprising configurable computing physical and logical resources, for example, networks, servers, storage, applications, services, etc., and data distributed over the network 105, for example, the internet. The cloud computing environment provides on-demand network access to a shared pool of the configurable computing physical and logical resources. The server 101 may include a medical database 102 that comprises medical images and associated medical data related to a plurality of patients that is maintained by a healthcare service provider. The server 101 may include an image processing module 103 that is configured to visualize a colon of a patient. Additionally, the server 101 may include a network interface 104 for communicating with the client device 107A-N via the network 105.

The client device 107A-N are user devices, used by users, for example, a medical personnel such as a radiologist, pathologist, physician, etc. In an embodiment, the user device 107A-N may be used by the user to receive data associated with the patient. The data can be accessed by the user via a graphical user interface of an end user web application on the user device 107A-N. In another embodiment, a request may be sent to the server 101 to access the data associated with the patient via the network 105. An imaging unit 108 may be connected to the server 101 through the network 105. The unit 108 may be a medical imaging unit 108 capable of acquiring a plurality of medical images. The medical imaging unit 108 may be, for example, a scanner unit such as a computed tomography imaging unit, an X-ray imaging unit, etc.

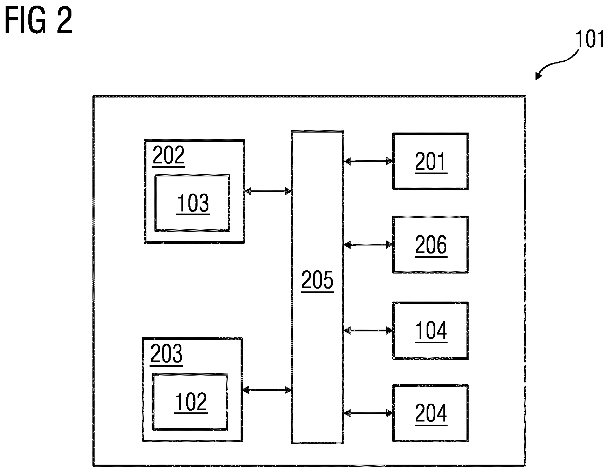

FIG 2 is a block diagram of a data processing system 101 in which an embodiment can be implemented, for example, as a system 101 for visualizing a colon of a patient, configured to perform the processes as described therein. It is appreciated that the server 101 is an exemplary implementation of the system in FIG 2. In FIG 2, said data processing system 101 comprises a processing unit 201, a memory 202, a storage unit 203, an input unit 204, an output unit 206, a bus 205, and a network interface 104.

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 101 may also include embedded controllers, such as generic or programmable logic devices or arrays, application specific integrated circuits, single-chip computers, and the like.

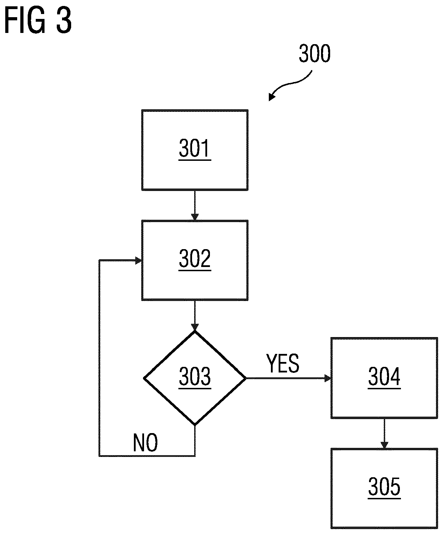

The memory 202 may be volatile memory and non-volatile memory. The memory 202 may be coupled for communication with said processing unit 201. The processing unit 201 may execute instructions and/or code stored in the memory 202. A variety of computer-readable storage media may be stored in and accessed from said memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 201 includes an image processing module 103 stored in the form of machine-readable instructions on any of said above-mentioned storage media and may be in communication to and executed by processor 201. When executed by the processor 201, the image processing module 103 causes the processor 201 to process a medical image to visualize a colon of a patient. Method steps executed by the processor 201 to achieve the abovementioned functionality are elaborated upon in detail in FIG 3, 4, 5,and 6.

The storage unit 203 may be a non-transitory storage medium which stores a medical database 102. The medical database 102 is a repository of medical images and associated medical data sets related to one or more patients that is maintained by a healthcare service provider. The input unit 204 may include input means such as keypad, touch-sensitive display, camera (such as a camera receiving gesture-based inputs), etc. capable of receiving input signal such as a medical image. The bus 205 acts as interconnect between the processor 201, the memory 202, the storage unit 203, the input unit 204, the output unit 206 and the network interface 104.

Those of ordinary skilled in the art will appreciate that said hardware depicted in FIG 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A data processing system 101 in accordance with an embodiment of the present disclosure includes an operating system employing a graphical user interface. Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. Said operating system is modified or created in accordance with the present disclosure as described.

Disclosed embodiments provide systems and methods for processing medical images. In particular, the systems and methods may enable visualization of a colon of a patient.

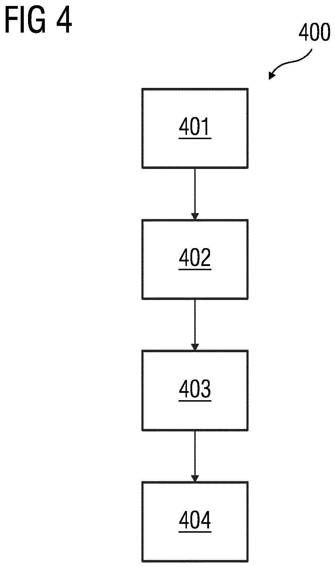

FIG 3 illustrates a flowchart of a method 300 of visualizing a colon of a patient. At step 301, a medical image data associated with the colon of the patient is received. The medical image may be received from a medical imaging unit such as an X-ray imaging unit, or a computed tomography imaging unit,. Alternatively, the medical image may be received from the medical database 102. The medical image may include one or more objects associated with the patient. The objects may be one or more body parts associated with the patient. In the present embodiment, the imaged object may include the colon of the patient. At step 302, a diameter of the colon is identified from the medical image. The diameter of the colon may be the longest distance between two points of curvature on parallel walls of the colon. The method steps for identifying the diameter of the colon are described in further detail in FIG 4. At step 303, it is determined if the diameter of the colon is less than a pre-defined threshold associated with the diameter of the colon. In an embodiment, the pre-defined threshold associated with the diameter of the colon may be the minimum range of diameter that the colon should be to accurately visualize the colon. The accurate visualization may enable a physician to analyze the colon for abnormalities without the need for a repeat medical scan. For example, the pre-defined threshold associated with the diameter of the colon may be a range of 3 cm and 9 cm. The diameter of the colon in the medical image may be determined at regular distance intervals. For example, the diameter of the colon may be measured at every 1 mm distance in the colon. This enables effective identification of location(s) in the colon which may have a diameter lesser than the pre-defined threshold.

At step 304, if the diameter of the colon in the medical image is less than the pre-defined threshold at a given location in the colon, one or more voxels associated with the colon in the medical image is adjusted. For example, the one or more voxels associated with the colon may be displaced such that the diameter of the colon in the given location meets the pre-defined threshold. In an embodiment, the one or more voxels associated with the colon may be located in an inner surface of the colon in the medical image. Therefore, the voxels may be displaced such that any medical information associated with the colon is not lost. Adjustment/displacement of the one or more voxels associated with the colon in the medical image may include addition of new voxel information in the medical image. For example, new voxel information may be added to the medical image using image interpolation algorithms. The image interpolation algorithms generate new voxel information based on an approximation of values associated with surrounding voxels in the medical image. In a further embodiment, the displacement of voxels associated with the inner surface of the colon may be performed such that voxels associated with the outer surface of the colon is also displaced appropriately. Therefore, distortion of the colon in the medical image is avoided. For example, the displacement of the outer surface of the colon at the given location may be performed such that the outer surface of the colon positions in line with another location in the colon which has a diameter equal to that of the pre-defined threshold. At step 305, a modified medical image is generated which includes the displaced one or more voxels associated with the colon and the additional voxel information generated by the interpolation algorithms. Therefore, the modified medical image includes a colon which may have a diameter equal to or greater than the pre-defined threshold.

FIG 4 illustrates a flowchart of a method 400 of identifying the diameter of the colon in the medical image, according to an embodiment of the invention. At step 401, a centerline associated with the colon is identified in the medical image. The centerline may be a line passing through a center point of the colon in the medical image. The center point may be a point at the core of the colon which is equidistant from the parallel walls of the colon. For example, an edge detection algorithm may be used to identify the inner surfaces of the colon, i.e. the parallel walls of the colon. The edge detection algorithm may identify the walls of the colon based on the voxel information associated with the walls of the colon. The distance between the walls of the colon may be determined and the centerline may be defined which may be equidistance to both the walls of the colon in the medical image. At step 402, a first center of curvature is determined on a first wall of the colon in the medical image. The first wall may be one of the two parallel walls of the colon in the medical image. The center of curvature may be a point in the curve of the first wall of the colon which is at a distance equal to the radius of the curvature of the colon. At step 403, a second center of curvature is determined on a second wall of the colon in the medical image. The second wall of the colon may be the second of the two parallel walls of the colon. In an embodiment, the second center of curvature may lie exactly opposite to the first center of curvature on the first wall of the colon. At step 404, the diameter of the colon is defined using the first center of curvature and the second center of curvature. Therefore, the first and the second center of curvature lie at opposite ends of the diameter and a line between the first and the second center of curvature passes through the centerline of the colon in the medical image.

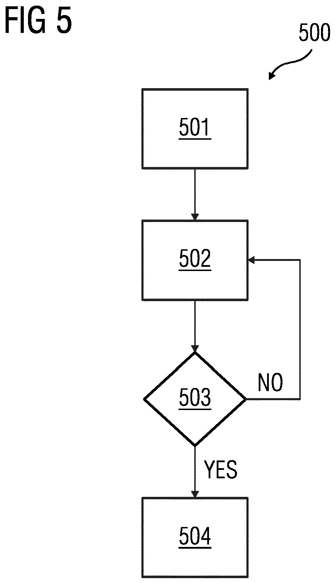

FIG 5 illustrates a method 500 of determining if the diameter of the colon is less than the pre-defined threshold, according to an embodiment of the invention. At step 501, a virtual sphere is positioned on the centerline of the colon in the medical image. A virtual sphere is virtual reference marker using which the diameter of the colon in the medical image may be determined. The virtual sphere may have a diameter equivalent to the pre-defined threshold for the diameter of the colon in the medical image. In an embodiment, the virtual sphere may be positioned at a point of entry of the colon in the medical image. For example, the virtual sphere may be positioned at a location in the medical image which represents a rectum of the patient. The virtual sphere may not touch the inner surface of the colon in the medical image. In a further embodiment, the virtual sphere is movable and at step 502, the virtual sphere is moved along the centerline of the colon in the medical image. As the virtual sphere moves along the centerline, it is determined if the virtual sphere comes in contact with the inner surface of the colon, at step 503. For example, the virtual sphere may have an outline which may come in contact with the inner surface of the colon in the medical image if the diameter of the colon is lesser than the pre-defined threshold. At step 504, a location at which the diameter of the colon is less than the pre-defined threshold is determined based on the virtual sphere coming in contact with the inner surface of the colon in the medical image. In an embodiment, one or more such locations may be identified in the medical image where the diameter of the colon is less than the pre-defined threshold.

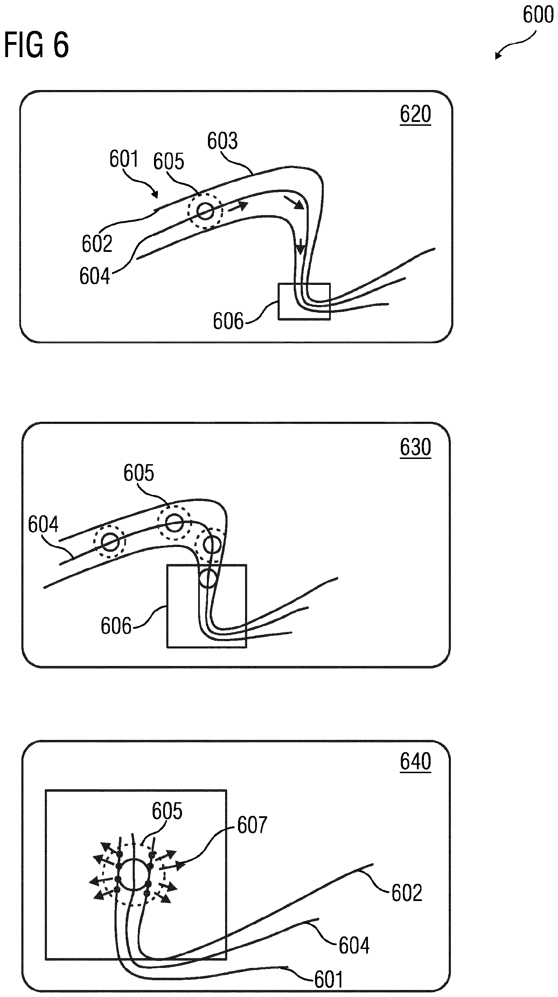

FIG 6 illustrates an exemplary embodiment of implementation 600 of a method of visualizing a colon, associated with a patient. Illustration 620 includes a colon 601 having an inner surface 602 and an outer surface 603. A centerline 604 is defined in the colon 601 which is a line running parallel to the walls of the colon 601 and is equidistant to the walls of the colon 601. A virtual sphere 605 is placed at an entry point of the colon 601. In an embodiment, the virtual sphere 605 may depict a minimum range (represented by a solid lined sphere) and a maximum range (represented by a dotted lined sphere). The arrow marks along the centerline 604 depict the direction in which the virtual sphere 605 may move. The colon 601 may include a narrow obstruction 606 which may require expansion. The narrow obstruction 606 may have a diameter less than the pre-defined threshold associated with the diameter. The maximum range of the virtual sphere 605 represents the pre-defined threshold value of diameter that the colon 601 should have.

Illustration 630 depicts movement of the virtual sphere 605 along the centerline 604 of the colon 601. As the virtual sphere 605 moves, there may be a possibility of the virtual sphere 605 coming in contact with the inner surface 602 of the colon 601. For example, the virtual sphere 605 may come in contact with the inner surface 602 of the colon 601 at the narrow obstruction 606. Illustration 640 depicts displacement 607 of one or voxels associated with the inner surface 602 of the colon 601. The arrows depict the direction in which the voxels may be displaced.

The displacement of the voxels may cause an expansion of the narrow obstruction 606 portion of the colon 601 resulting in better visualization of the colon. In an embodiment, the displacement of the voxels may be such that the voxels fit the surface of the virtual sphere 605. In a further embodiment, the virtual sphere 605 may be moved along the centerline 604 of the colon 601 to displace the voxels of the inner surface 602 of the colon, until a an acceptable size of colon 601 is generated in the medical image.

The advantage of the invention is that the need for the patient to undergo frequent medical scanning processes is avoided. Therefore, over-exposure of the patient to radiation is avoided. Furthermore, time required to prepare a patient for medical scanning process and to plan next steps of treatment is reduced. Additionally, frequent inflation of colon for colonography procedure is avoided.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the par-ticulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

## Claims

1. A method (300) of visualizing a colon of a patient, the method comprising computer implemented steps of:
receiving a medical image suitable for virtual colonoscopy of the patient;
identifying from the medical image a diameter of the colon (601);
determining if the diameter of the colon (601) is less than a pre-defined threshold; and
adjusting one or more voxels associated with the colon (601) in the medical image, if the diameter of the colon (601) is less than the pre-defined threshold, wherein the one or more voxels are adjusted such that the diameter of the colon (601) in the medical image is equal to or greater than the pre-defined threshold.

2. The method (300) according to claim 1, wherein identifying from the medical image the diameter of the colon (601) comprises:
identifying a centerline (604) associated with the colon (601) in the medical image, wherein the centerline (604) is a line passing through a center point of the colon (601) in the medical image;
determining a first center of curvature on a first wall of the colon (601) in the medical image;
determining a second center of curvature on a second wall of the colon (601) in the medical image, wherein the second wall is a wall parallel to the first wall of a tubular structure of the colon (601) and the second center of curvature lies opposite to the first center of curvature;
defining the diameter of the colon (601) based on the first center curvature and the second center of curvature, wherein the diameter comprises the first center of curvature and second center of curvature as the end points, and wherein a line between the first center of curvature and the second center of curvature passes through the centerline (604) of the colon (601) in the medical image.

3. The method (300) according to claim 2, wherein the first wall of the colon (601) and the second wall of the colon (601) form a part of the inner surface of the colon (601).

4. The method (300) according to any one of claims 1 - 3, wherein the pre-defined threshold associated with the diameter of the colon (601) in the medical image is in a range of 3 cm to 9 cm.

5. The method (300) according to any one of claims 1 - 4, wherein determining if the diameter of the colon (601) is less than the pre-defined threshold comprises:
positioning a virtual sphere (605) on the centerline (604) of the colon (601) in the medical image, wherein the virtual sphere (605) has a diameter identical to that of the pre-defined threshold diameter of the colon (601), wherein the virtual sphere (605) does not touch the inner surface (602) of the colon (601);
moving the virtual sphere (605) along the centerline (604) of the colon (601) in the medical image;
determining if the virtual sphere (605) comes in contact with the inner surface (602) of the colon (601); and
determining at least one location in the colon (601) where the diameter of the colon (601) is less than the pre-defined threshold if the virtual sphere (605) touches the inner surface of the colon (601) in the medical image.

6. The method (300) according to claim 5, wherein adjusting the one or more voxels associated with the colon (601) in the medical image comprises:
displacing the one or more voxels associated with the colon (601) in the medical image based on the diameter of the virtual sphere (605); and
generating a modified medical image comprising the displaced one or more voxels associated with the colon (601), wherein the modified medical image comprises colon (601) having a diameter equal to or greater than the pre-defined threshold.

7. The method (300) according to claim 5 or 6, wherein the virtual sphere (605) is positioned at a point of entry of the colon (601) in the medical image.

8. A medical imaging device (101) for visualizing a colon (601) of a patient, the device (101) comprising:
one or more processing units (201);
a scanner unit (108) configured to capture one or more medical images; and
a memory (202) coupled to the one or more processing units (201), the memory (202) comprising an image processing module (103) configured to perform the method steps as claimed in any one of claims 1 to 7.

9. A system (100) for visualizing a colon (601) of a patient, the system (100) comprising:
one or more servers (101);
a medical imaging unit (108) coupled to the one or more servers (101);
the one or more servers (101) comprising instructions, which when executed causes the one or more servers (101) to perform the method steps as claimed in any one of claims 1 to 7.

10. A computer program product comprising machine readable instructions, that when executed by one or more processing units (201), cause the one or more processing units (201) to perform method steps according to claims 1-7.

11. A computer readable medium on which program code sections of a computer program are saved, the program code sections being loadable into and/or executable in a system (100) to make the system (100) execute the method steps according to any one of the claims 1 to 7 when the program code sections are executed in the system (100).

## Patentansprüche

1. Verfahren (300) zum Visualisieren eines Dickdarms eines Patienten, wobei das Verfahren die folgenden computerimplementierten Schritte umfasst:
Empfangen eines medizinischen Bildes, das zur virtuellen Koloskopie des Patienten geeignet ist;
Identifizieren, aus dem medizinischen Bild, eines Durchmessers des Dickdarms (601);
Bestimmen, ob der Durchmesser des Dickdarms (601) kleiner als eine vordefinierte Schwelle ist; und
Anpassen eines oder mehrerer Voxel, die mit dem Dickdarm (601) in dem medizinischen Bild assoziiert sind, falls der Durchmesser des Dickdarms (601) kleiner als die vordefinierte Schwelle ist, wobei das eine oder die mehreren Voxel so angepasst werden, dass der Durchmesser des Dickdarms (601) in dem medizinischen Bild gleich oder größer als die vordefinierte Schwelle ist.

2. Verfahren (300) nach Anspruch 1, wobei das Identifizieren, aus dem medizinischen Bild, des Durchmessers des Dickdarms (601) Folgendes umfasst:
Identifizieren einer Mittellinie (604), die mit dem Dickdarm (601) in dem medizinischen Bild assoziiert ist, wobei die Mittellinie (604) eine Linie ist, die durch einen Mittelpunkt des Dickdarms (601) in dem medizinischen Bild hindurchgeht;
Bestimmen eines ersten Krümmungsmittelpunkts an einer ersten Wand des Dickdarms (601) in dem medizinischen Bild;
Bestimmen eines zweiten Krümmungsmittelpunkts an einer zweiten Wand des Dickdarms (601) in dem medizinischen Bild, wobei die zweite Wand eine Wand parallel zu der ersten Wand einer röhrenartigen Struktur des Dickdarms (601) ist und der zweite Krümmungsmittelpunkt gegenüber dem ersten Krümmungsmittelpunkt ist;
Definieren des Durchmessers des Dickdarms (601) basierend auf dem ersten Krümmungsmittelpunkt und dem zweiten Krümmungsmittelpunkt, wobei der Durchmesser den ersten Krümmungsmittelpunkt und den zweiten Krümmungsmittelpunkt als Endpunkte umfasst und wobei eine Linie zwischen dem ersten Krümmungsmittelpunkt und dem zweiten Krümmungsmittelpunkt durch die Mittellinie (604) des Dickdarms (601) in dem medizinischen Bild hindurchgeht.

3. Verfahren (300) nach Anspruch 2, wobei die erste Wand des Dickdarms (601) und die zweite Wand des Dickdarms (601) einen Teil der Innenoberfläche des Dickdarms (601) bilden.

4. Verfahren (300) nach einem der Ansprüche 1-3, wobei die vordefinierte Schwelle, die mit dem Durchmesser des Dickdarms (601) in dem medizinischen Bild assoziiert ist, in einem Bereich von 3 cm bis 9 cm liegt.

5. Verfahren (300) nach einem der Ansprüche 1-4, wobei das Bestimmen, ob der Durchmesser des Dickdarms (601) kleiner als die vordefinierte Schwelle ist, Folgendes umfasst:
Positionieren einer virtuellen Kugel (605) auf der Mittellinie (604) des Dickdarms (601) in dem medizinischen Bild, wobei die virtuelle Kugel (605) einen Durchmesser identisch mit jenem des vordefinierten Schwellendurchmessers des Dickdarms (601) aufweist, wobei die virtuelle Kugel (605) die Innenoberfläche (602) des Dickdarms (601) nicht berührt;
Bewegen der virtuellen Kugel (605) entlang der Mittellinie (604) des Dickdarms (601) in dem medizinischen Bild;
Bestimmen, ob die virtuelle Kugel (605) in Kontakt mit der Innenoberfläche (602) des Dickdarms (601) kommt; und
Bestimmen wenigstens eines Ortes in dem Dickdarm (601), an dem der Durchmesser des Dickdarms (601) kleiner als die vordefinierte Schwelle ist, falls die virtuelle Kugel (605) die Innenoberfläche des Dickdarms (601) in dem medizinischen Bild berührt.

6. Verfahren (300) nach Anspruch 5, wobei das Anpassen des einen oder der mehreren Voxel, die mit dem Dickdarm (601) in dem medizinischen Bild assoziiert sind, Folgendes umfasst:
Verschieben des einen oder der mehreren Voxel, die mit dem Dickdarm (601) in dem medizinischen Bild assoziiert sind, basierend auf dem Durchmesser der virtuellen Kugel (605); und
Erzeugen eines modifizierten medizinischen Bildes, umfassend das eine oder die mehreren verschobenen Voxel, die mit dem Dickdarm (601) assoziiert sind, wobei das modifizierte medizinische Bild den Dickdarm (601) mit einem Durchmesser gleich oder größer als die vordefinierte Schwelle umfasst.

7. Verfahren (300) nach Anspruch 5 oder 6, wobei die virtuelle Kugel (605) an einem Eingangsort des Dickdarms (601) in dem medizinischen Bild positioniert ist.

8. Medizinische Bildgebungsvorrichtung (101) zur Visualisierung eines Dickdarms (601) eines Patienten, wobei die Vorrichtung (101) Folgendes umfasst:
eine oder mehrere Verarbeitungseinheiten (201);
eine Scannereinheit (108), die zum Erfassen eines oder mehrerer medizinischer Bildes ausgelegt ist; und
einen Speicher (202), der mit der einen oder den mehreren Verarbeitungseinheiten (201) gekoppelt ist, wobei der Speicher (202) ein Bildverarbeitungsmodul (103) umfasst, das zum Durchführen der Verfahrensschritte nach einem der Ansprüche 1 bis 7 ausgelegt ist.

9. System (100) zur Visualisierung eines Dickdarms (601) eines Patienten, wobei das System (100) Folgendes umfasst:
einen oder mehrere Server (101);
eine medizinische Bildgebungseinheit (108), die mit dem einen oder den mehreren Servern (101) gekoppelt ist;
wobei der eine oder die mehreren Server (101) Anweisungen umfassen, die, wenn sie ausgeführt werden, den einen oder die mehreren Server (101) zum Durchführen der Verfahrensschritte nach einem der Ansprüche 1 bis 7 veranlassen.

10. Computerprogrammprodukt, umfassend maschinenlesbare Anweisungen, die, wenn sie durch eine oder mehrere Verarbeitungseinheiten (201) ausgeführt werden, die eine oder mehreren Verarbeitungseinheiten (201) zum Durchführen von Verfahrensschritten nach einem der Ansprüche 1-7 veranlassen.

11. Computerlesbares Medium, auf dem Programmcodeabschnitte eines Computerprogramms gespeichert sind, wobei die Programmcodeabschnitte in ein System (100) geladen und/oder in diesem ausgeführt werden können, um das System (100) zum Ausführen der Verfahrensschritte nach einem der Ansprüche 1 bis 7 zu veranlassen, wenn die Programmcodeabschnitte in dem System (100) ausgeführt werden.

## Revendications

1. Procédé (300) de visualisation du côlon d'un patient, le procédé comprenant les étapes mises en œuvre par ordinateur de :
réception d'une image médicale adaptée à la coloscopie virtuelle du patient ;
identification à partir de l'image médicale d'un diamètre du côlon (601) ;
détermination si le diamètre du côlon (601) est inférieur à un seuil prédéfini ; et
ajustement d'un ou plusieurs voxels associés au côlon (601) dans l'image médicale, si le diamètre du côlon (601) est inférieur au seuil prédéfini, le ou les voxels étant ajustés de telle sorte que le diamètre du côlon (601) dans l'image médicale soit égal ou supérieur au seuil prédéfini.

2. Procédé (300) selon la revendication 1, l'identification à partir de l'image médicale du diamètre du côlon (601) comprenant :
l'identification d'une ligne centrale (604) associée au côlon (601) dans l'image médicale, la ligne centrale (604) étant une ligne passant par un point central du côlon (601) dans l'image médicale ;
la détermination d'un premier centre de courbure sur une première paroi du côlon (601) dans l'image médicale ;
la détermination d'un second centre de courbure sur une seconde paroi du côlon (601) dans l'image médicale, la seconde paroi étant une paroi parallèle à la première paroi d'une structure tubulaire du côlon (601) et le second centre de courbure étant situé à l'opposé du premier centre de courbure ;
la définition du diamètre du côlon (601) sur la base du premier centre de courbure et du second centre de courbure, le diamètre comprenant le premier centre de courbure et le second centre de courbure comme points d'extrémité, et une ligne entre le premier centre de courbure et le second centre de courbure passant par la ligne centrale (604) du côlon (601) dans l'image médicale.

3. Procédé (300) selon la revendication 2, la première paroi du côlon (601) et la seconde paroi du côlon (601) formant une partie de la surface interne du côlon (601).

4. Procédé (300) selon l'une quelconque des revendications 1 à 3, le seuil prédéfini associé au diamètre du côlon (601) dans l'image médicale étant compris entre 3 cm et 9 cm.

5. Procédé (300) selon l'une quelconque des revendications 1 à 4, la détermination du fait que le diamètre du côlon (601) est inférieur au seuil prédéfini comprenant :
le positionnement d'une sphère virtuelle (605) sur la ligne centrale (604) du côlon (601) dans l'image médicale, la sphère virtuelle (605) ayant un diamètre identique à celui du diamètre seuil prédéfini du côlon (601), la sphère virtuelle (605) ne touchant pas la surface interne (602) du côlon (601) ;
le déplacement de la sphère virtuelle (605) le long de la ligne centrale (604) du côlon (601) dans l'image médicale ;
la détermination si la sphère virtuelle (605) entre en contact avec la surface interne (602) du côlon (601) ; et
la détermination d'au moins un emplacement dans le côlon (601) où le diamètre du côlon (601) est inférieur au seuil prédéfini si la sphère virtuelle (605) touche la surface interne du côlon (601) dans l'image médicale.

6. Procédé (300) selon la revendication 5, l'ajustement du ou des voxels associés au côlon (601) dans l'image médicale comprenant :
le déplacement du ou des voxels associés au côlon (601) dans l'image médicale sur la base du diamètre de la sphère virtuelle (605) ; et
la génération d'une image médicale modifiée comprenant le ou les voxels déplacés associés au côlon (601), l'image médicale modifiée comprenant le côlon (601) ayant un diamètre égal ou supérieur au seuil prédéfini.

7. Procédé (300) selon la revendication 5 ou 6, la sphère virtuelle (605) étant positionnée à un point d'entrée du côlon (601) dans l'image médicale.

8. Dispositif d'imagerie médicale (101) pour visualiser un côlon (601) d'un patient, le dispositif (101) comprenant :
une ou plusieurs unités (201) de traitement ;
une unité de balayage (108) configurée pour capturer une ou plusieurs images médicales ; et
une mémoire (202) couplée à la ou aux unités de traitement (201), la mémoire (202) comprenant un module de traitement d'images (103) configuré pour réaliser les étapes du procédé selon l'une quelconque des revendications 1 à 7.

9. Système (100) pour visualiser le côlon (601) d'un patient, le système (100) comprenant :
un ou plusieurs serveurs (101) ;
une unité d'imagerie médicale (108) couplée au ou aux serveurs (101) ;
le ou les serveurs (101) comprenant des instructions qui, lorsqu'elles sont exécutées, amènent le ou les serveurs (101) à réaliser les étapes du procédé selon l'une quelconque des revendications 1 à 7.

10. Produit de programme informatique comprenant des instructions lisibles par machine qui, lorsqu'elles sont exécutées par une ou plusieurs unités de traitement (201), amènent la ou les unités de traitement (201) à réaliser des étapes du procédé selon les revendications 1 à 7.

11. Support lisible par ordinateur sur lequel des sections de code de programme d'un programme informatique sont sauvegardées, les sections de code de programme pouvant être chargées dans et/ou exécutées dans un système (100) pour amener le système (100) à exécuter les étapes du procédé selon l'une quelconque des revendications 1 à 7 lorsque les sections de code de programme sont exécutées dans le système (100).
